# EUROPEAN PATENT SPECIFICATION

(11) **EP 4 417 352 B1**
(45) Date of publication and mention of the grant of the patent: **29.10.2025**
(21) Application number: 22880727.7
(22) Date of filing: 20.09.2022
(51) Int. Cl.: B23D 61/12, B23D 65/00

(54) **BAND SAW BLADE AND MANUFACTURING METHOD FOR BAND SAW BLADE**
BANDSÄGEBLATT UND HERSTELLUNGSVERFAHREN FÜR DAS BANDSÄGEBLATT
LAME DE SCIE À RUBAN ET PROCÉDÉ DE FABRICATION DE LAME DE SCIE À RUBAN

(30) Priority: 14.10.2021 JP 2021168801
(43) Date of publication of application: 21.08.2024
(73) Proprietor: Amada Co., Ltd., Isehara-shi, Kanagawa 259-1196 (JP); Amada Machinery Co., Ltd., Kanagawa 259-1196 (JP)
(72) Inventor: KAWAKAMI Tatsuya, Isehara-shi, Kanagawa 259-1196 (JP)
(74) Representative: Grünecker Patent- und Rechtsanwälte PartG mbB
(86) International application number: PCT/JP2022/034997
(87) International publication number: WO 2023/063031

(56) References cited:
- JP-A- 2007 061 957
- JP-A- 2010 280 022
- JP-A- 2017 064 898
- JP-A- H0 430 908
- JP-A- H07 116 917
- JP-A- S5 453 383
- JP-B2- 4 662 257
- JP-B2- 5 174 467
- US-A- 3 988 955
- US-A1- 2004 035 254
- US-A1- 2011 154 970
- US-A1- 2014 150 620

## Description

### [TECHNICAL FIELD]

The present disclosure relates to a band saw blade and a method for manufacturing the band saw blade.

### [BACKGROUND ART]

Patent Literature 1 discloses a method for coating a band saw blade in a coating device by winding the band saw blade into a spiral coil shape in order to coat a hard material on the tooth group of the band saw blade.

### [CITATION LIST]

### [Patent Literature]

[Patent Literature 1] Japanese Patent NO. 5174467

### [SUMMARY OF INVENTION]

The method described in Patent Literature 1 is a general coating method for coating a band saw blade, and is performed at the final stage of the manufacturing process for the band saw blade. In this method, when the band saw blade is wound into a spiral coil shape, a band-like spacer is lapped and wound together with the band saw blade in order to form a gap between the adjacent tooth groups in a radial direction. Since this gap is formed, it is possible to perform coating on the tooth groups well.

Meanwhile, conventionally, when the tooth groups of the band saw blade have set teeth which are set in the left-right direction which is the thickness direction, the straight teeth are processed into the set teeth by set processing, and then coating on the tooth groups is performed. In this case, there may be a difference in the thickness of a coat layer formed by coating between the inner surface, which is the inner side of the set teeth in the set direction, and the outer surface, which is the outer side of the set teeth in the set direction. That is, since the inner surface is a shadow of the inclination in the set direction, the coat layer formed on the inner surface tends to be smaller in thickness than the coat layer formed on the outer surface which is a front side of the inclination in the set direction. Therefore, an uneven thickness of the coat layer is generated in the teeth of the band saw blade, especially in the set teeth. Therefore, a band saw blade and a method for manufacturing the band saw blade without an uneven thickness of the coat layer have been desired even if the band saw blade has set teeth. US 3 988 955 A discloses the preambles of claim 1 and claim 3.

An aspect of the present disclosure is a band saw blade comprising: a body portion having a band-like and an endless shape; a tooth portion in which a tooth group, which is a set of a predetermined number of teeth including a set tooth, is repeatedly formed on one edge side of the body portion; and a coat layer which is formed on a surface of the teeth of the tooth portion, wherein the set tooth has a first indentation portion as a recessed portion in the coat layer on an outer surface in a set direction, and thickness of the coat layer in the recessed portion of the first indentation portion is thinner than that of the coat layer in portions other than the recessed portion.

According to an aspect of the present disclosure, it is apparent that the coat layer is formed prior to set processing of the set tooth, and thus there is no uneven thickness of the coat layer in the set tooth.

An aspect of the present disclosure is a method for manufacturing a band saw blade which is provided with a body portion having a band-like and an endless shape; a tooth portion in which a tooth group, which is a set of a predetermined number of teeth including a set tooth, is repeatedly formed on one edge side of the body portion; and a coat layer which is formed on a surface of the teeth of the tooth portion, the method comprising: performing a coat layer formation step of forming a coat layer on the teeth of an intermediate blade in which the teeth are all straight teeth, and then performing set processing of setting and forming a predetermined tooth into the set tooth.

According to an aspect of the present disclosure, since the coat layer is formed prior to set processing of the set tooth, there is no uneven thickness of the coat layer in the set tooth.

According to an aspect of the present disclosure, an effect is obtained in which there is no uneven thickness of the coat layer in the teeth of the band saw blade, especially in the set teeth.

### [BRIEF DESCRIPTION OF DRAWINGS]

[FIG. 1A] FIG. 1A is a two-directional view illustrating a side surface and an upper surface of a first intermediate blade 1A used for manufacturing a band saw blade 1 according to a present embodiment.
[FIG. 1B] FIG. 1B is a two-directional view illustrating a side surface and an upper surface of a spacer 2 used for manufacturing the band saw blade 1 according to the present embodiment.
[FIG. 2] FIG. 2 is a plan view illustrating a coil body C in which the first intermediate blade 1A and the spacer 2 are lapped and wound.
[FIG. 3] FIG. 3 is an enlarged view of F3 region in FIG. 2.
[FIG. 4] FIG. 4 is a schematic diagram for explaining coating processing performed on the coil body C by a coating device 7.
[FIG. 5] FIG. 5 is a side view illustrating a second intermediate blade 1B in which a coat layer 13 is formed on a tooth portion 12.
[FIG. 6] FIG. 6 is a cross-sectional view at position S6-S6 in FIG. 5.
[FIG. 7A] FIG. 7A is a diagram for explaining set processing for the second intermediate blade 1B, and is a cross-sectional view illustrating a state immediately before the processing.
[FIG. 7B] FIG. 7B is a diagram for explaining the set processing for the second intermediate blade 1B, and is a cross-sectional view illustrating a state during the processing.
[FIG. 8] FIG. 8 is a top view illustrating a third intermediate blade 1C in which the second intermediate blade 1B is subjected to set processing.
[FIG. 9] FIG. 9 is a diagram for explaining a joining process in which the third intermediate blade 1C is joined into a loop shape to form the band saw blade 1.
[FIG. 10A] FIG. 10A is a right side view illustrating a surface state of a main portion of a tooth 12a in the band saw blade 1.
[FIG. 10B] FIG. 10B is a left side view illustrating a surface state of the tooth 12a in the band saw blade 1.
[FIG. 11A] FIG. 11A is a cross-sectional view illustrating a cross section of the tooth 12a in the band saw blade 1.
[FIG. 11B] FIG. 11B is an enlarged view of an indentation portion T81 in FIG. 11A.
[FIG. 11C] FIG. 11C is an enlarged view of an indentation portion T82 in FIG. 11A.
[FIG. 12A] FIG. 12A is a right side view illustrating a surface state of a tooth 112a in a band saw blade 101 of a comparative example.
[FIG. 12B] FIG. 12B is a left side view illustrating the surface state of the tooth 112a in the band saw blade 101 of the comparative example.
[FIG. 13A] FIG. 13A is a cross-sectional view illustrating a cross section of the tooth 112a in the band saw blade 101 of the comparative example.
[FIG. 13B] FIG. 13B is an enlarged view of an indentation portion T181 in FIG. 13A.
[FIG. 13C] FIG. 13C is an enlarged view of an indentation portion T182 in FIG. 13A.

### [DESCRIPTION OF EMBODIMENT]

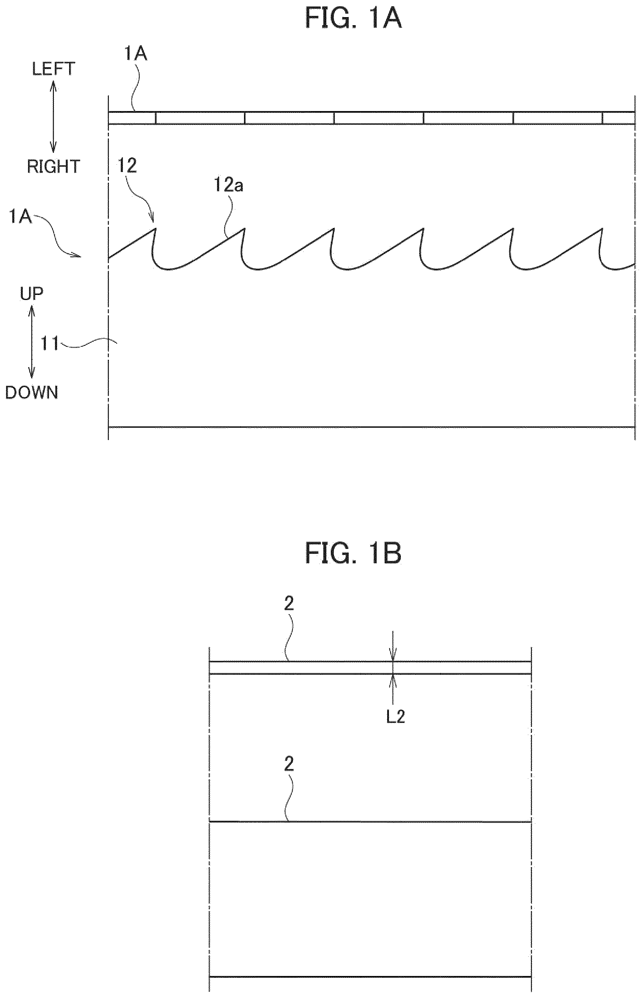

FIG. 1A is a two-directional view illustrating a side surface and an upper surface of a first intermediate blade 1A used for manufacturing a band saw blade 1 according to a present embodiment. FIG. 1B is a two-directional view illustrating a side surface and an upper surface of a spacer 2 used for manufacturing the band saw blade 1 according to the present embodiment. The band saw blade 1 is made of a long band-shaped first intermediate blade 1A, and passes through a second intermediate blade 1B and a third intermediate blade 1C, which are intermediate bodies obtained as the manufacturing process progresses, and then is formed by endlessly joining the third intermediate blade 1C which is cut into pieces having a predetermined length.

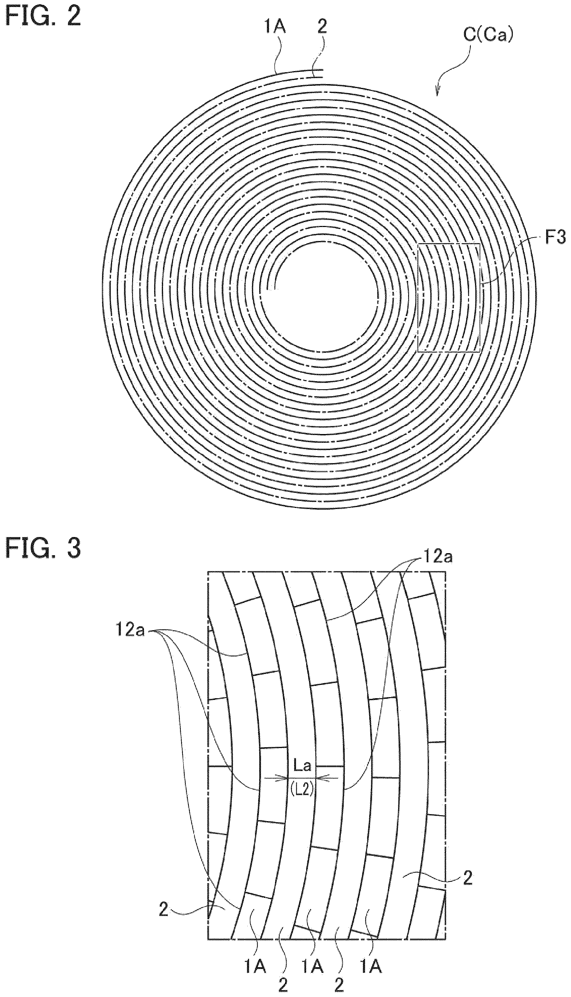

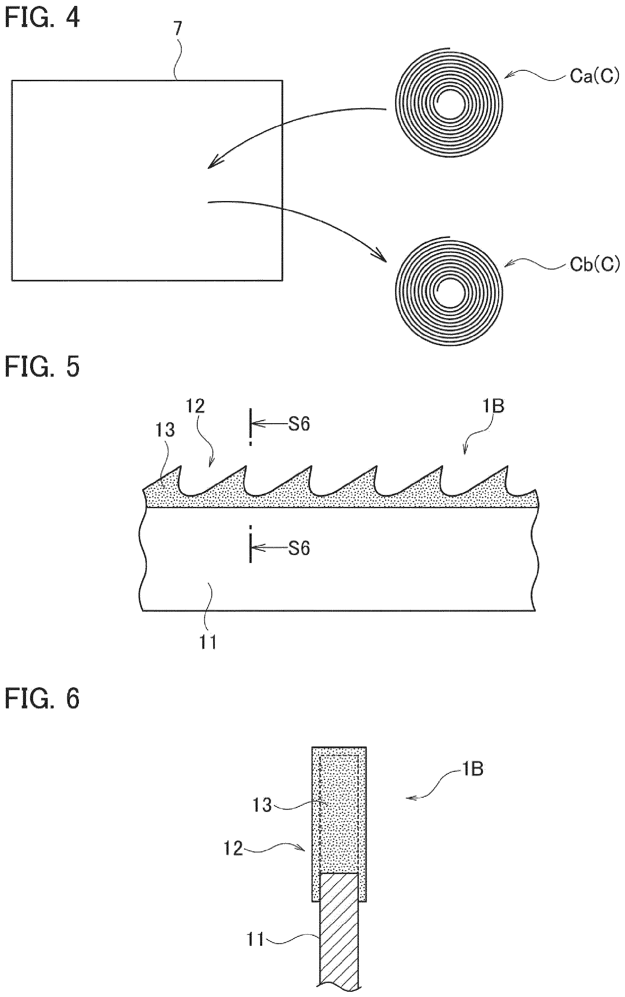

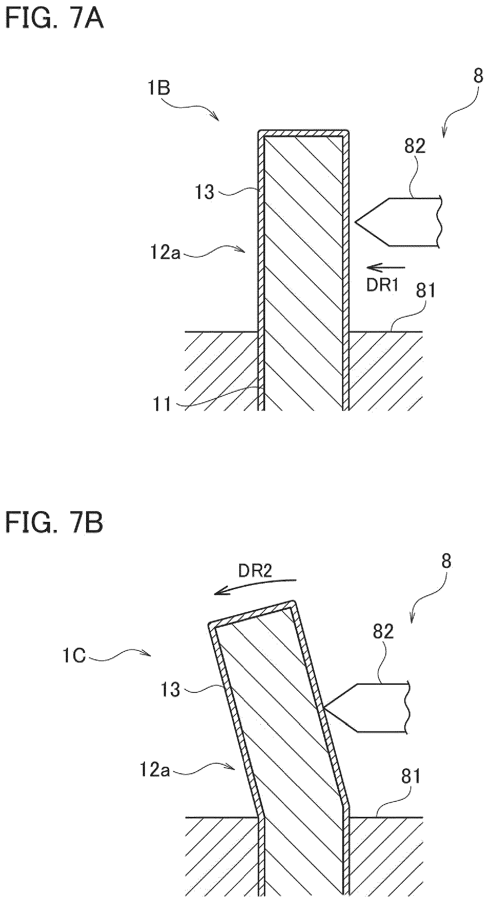

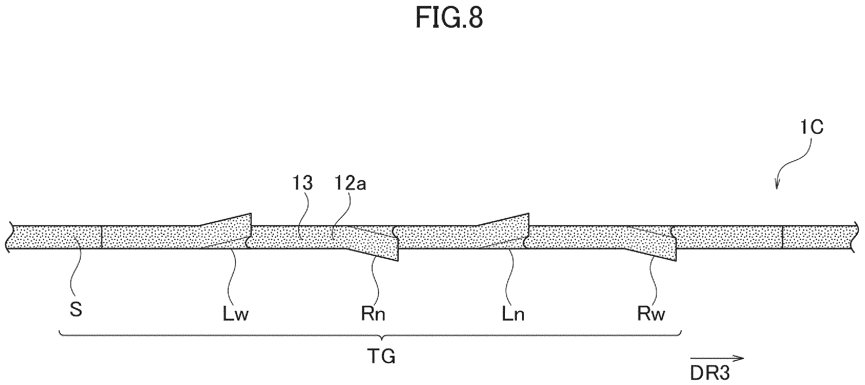

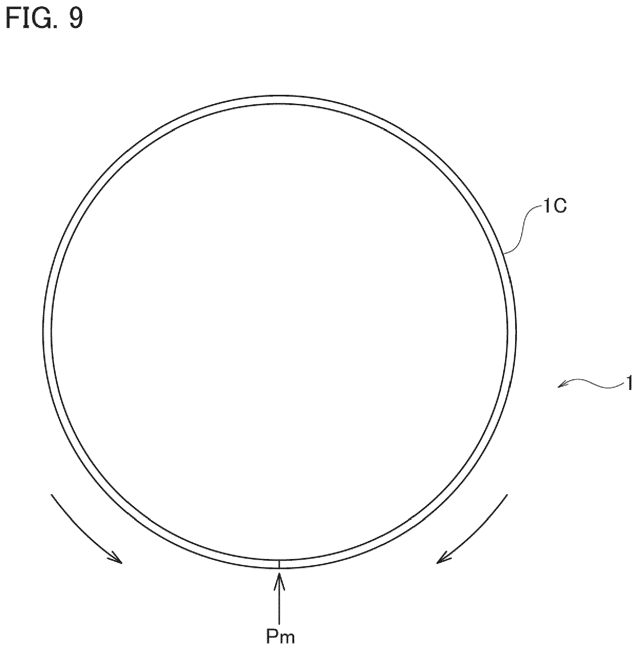

First, a method for manufacturing the band saw blade 1 will be described with reference to FIG. 1 and FIGS. 2 to 9. FIG. 2 is a plan view illustrating a coil body C in which the first intermediate blade 1A and the spacer 2 are lapped and wound. FIG. 3 is an enlarged view of F3 region in FIG. 2. FIG. 4 is a schematic diagram for explaining coating processing performed on the coil body C by a coating device 7. FIG. 5 is a side view illustrating a second intermediate blade 1B in which a coat layer 13 is formed on a tooth portion 12. FIG. 6 is a cross-sectional view at position S6-S6 in FIG. 5. FIG. 7A is a diagram for explaining set processing for the second intermediate blade 1B, and is a cross-sectional view illustrating a state immediately before the processing. FIG. 7B is a diagram for explaining the set processing for the second intermediate blade 1B, and is a cross-sectional view illustrating a state during the processing. FIG. 8 is a top view illustrating a third intermediate blade 1C in which the second intermediate blade 1B is subjected to set processing. FIG. 9 is a diagram for explaining a joining process in which the third intermediate blade 1C is endlessly joined to form the band saw blade 1.

First, a first intermediate blade 1A having a predetermined length is prepared as a material and a spacer 2 having a length equivalent to that of the first intermediate blade 1A is prepared as a manufacturing jig. As illustrated in FIG. 1A, the first intermediate blade 1A includes a long band-shaped body portion 11, and a tooth portion 12 formed on one edge side (upper edge side) of the body portion 11. The tooth portion 12 has a plurality of teeth 12a formed continuously in the longitudinal direction of the body portion 11. The teeth 12a are straight teeth. As illustrated in FIG. 2B, the spacer 2 is a long band-shaped member made of metal. The spacer 2 is slightly smaller in width than the body portion 11 of the first intermediate blade 1A, and the thickness thereof is illustrated as a thickness L2.

Next, as illustrated in FIG. 2, the first intermediate blade 1A and the spacer 2 are lapped with edge portions on the opposite side of the tooth portion 12 aligned, and the coil body C is formed by lapping and winding the first intermediate blade 1A and the spacer 2 into a spiral coil shape. In FIG. 2, for the sake of simplification, the first intermediate blade 1A is illustrated as a solid line, and the spacer 2 is illustrated as a dash-dotted line. As illustrated in FIG. 3, the coil body C is lapped and wound into a spiral coil shape with the spacers 2 interposed between the adjacent first intermediate blades 1A in the radial direction. Since the teeth 12a of the first intermediate blades 1A are all straight teeth, the smallest gap La between the adjacent first intermediate blades 1A in the radial direction is a gap between the body portions 11, and is the thickness L2 of the spacer 2.

As illustrated in FIG. 4, the coil body C is put into the coating device 7 to perform coating processing. Hereinafter, the coil body C before the coating processing is referred to as a pre-processed coil body Ca, and the coil body C after the coating processing is referred to as a post-processed coil body Cb.

A method of coating processing is performed by a PVD (physical vapor deposition) method; however, the method is not limited thereto. For example, a method of the coating processing may be performed by a CVD (chemical vapor deposition) method. At least, a range of the coating processing in the first intermediate blade 1A is the surface of the tooth portion 12, which is the portion of the pre-process coil body Ca which is not in contact with the spacer 2. In addition, in the range of the coating processing, a difference in the thickness of the deposited layer is generated between the shadowed portion and the unshadowed portion, resulting in the formation of unevenness.

After the coating processing is performed under predetermined conditions, the post-processed coil body Cb is taken out to unwind the winding of the coil body Cb. From the post-processed coil body Cb, the second intermediate blade 1B is obtained in which the coating processing is performed on the tooth portion 12 of the first intermediate blade 1A.

As illustrated in FIGS. 5 and 6, in the second intermediate blade 1B, a coat layer 13 (a halftone dot portion) is formed, by coating processing, in such a way as to straddle the tooth portion 12 with which the spacer 2 is not in contact and the edge portion on the tooth portion 12 side in the body portion 11. The coat layer 13 (see FIG. 5) may be, for example, a layer of titanium nitride (TiN) or titanium aluminum nitride (TiAlN), or a layer of carbon nitride (TiCN) or chromium nitride (CrN), or a combination thereof.

Next, set processing is performed in which predetermined teeth among the teeth 12a, which are a plurality of straight teeth of the second intermediate blade 1B, are set to the left or right using a set tooth machine 8 to form set teeth. As illustrated in FIG. 7A, the set tooth machine 8 has a fixing unit 81 for pinching and supporting the second intermediate blade 1B in the thickness direction, and a processing unit 82 for locally hitting the side surface of the tooth 12a and pushing the tooth 12a in the thickness direction indicated by an arrow DR1.

The fixing unit 81 of the set tooth machine 8 pinches and fixes the body portion 11 such that the tooth portion 12 of the second intermediate blade 1B protrudes and is exposed from the fixing unit 81. Thereafter, as illustrated in FIG. 7B, the processing unit 82 pushes one side of the tooth 12a in the thickness direction, bends and sets the tooth 12a to the other side as illustrated by an arrow DR2.

This set processing is performed in either the left direction or the right direction on predetermined teeth of the second intermediate blade 1B by the set tooth machine 8, thereby obtaining the third intermediate blade 1C illustrated in FIG. 8. For example, the tooth portion 12 of the third intermediate blade 1C is formed such that a set of five teeth which are formed continuously constitutes one tooth group TG and the tooth group TG is repeatedly formed in the longitudinal direction. The tooth group TG illustrated in FIG. 8 is a set of a predetermined number of teeth including set teeth. Specifically, the tooth group TG is a set of five teeth: a right set tooth Rw, a left set tooth Ln, a right set tooth Rn, a left set tooth Lw, and a straight tooth S when seen from the cutting direction (arrow DR3) side. The set value of the left set tooth Lw and the right set tooth Rw is greater than that of the left set tooth Ln and the right set tooth Rn. The tooth group TG is not limited to the configuration illustrated in FIG. 8.

Next, as illustrated in FIG. 9, both ends of the body portion 11 are welded at the joint portion Pm where both ends of the body portion 11 are abutted against each other in the third intermediate blade 1C. As a result, the band saw blade 1 having a band-like and an endless shape is obtained.

In the method for manufacturing the band saw blade 1 described above, all the teeth 12a of the tooth portion 12 are straight teeth at the time of coating processing. After the coating processing, the set processing is performed to form the predetermined straight teeth into the set teeth. For this reason, the spacer 2 to be lapped and wound by the coil body C has the thickness L2. In this way, in the method for manufacturing the band saw blade 1, the coating processing is performed on all of the straight teeth. Accordingly, unlike in the case where the coating processing is performed on the set teeth, there is no difference in the thickness of the coat layer between the inner surface which is a shadow in the set direction and the outer surface which is a front surface in the set direction, resulting in the formation of no unevenness. That is, according to the method for manufacturing the band saw blade 1, the coat layer 13 becomes uniform in thickness in the coating range.

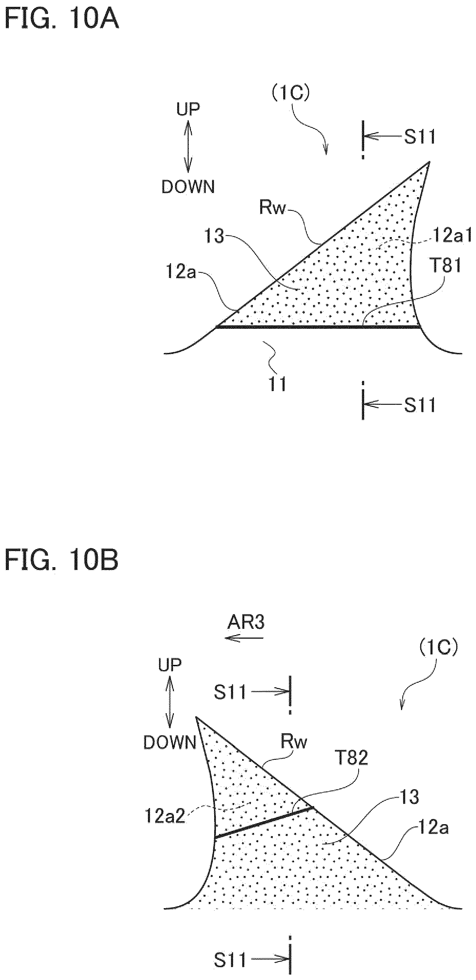

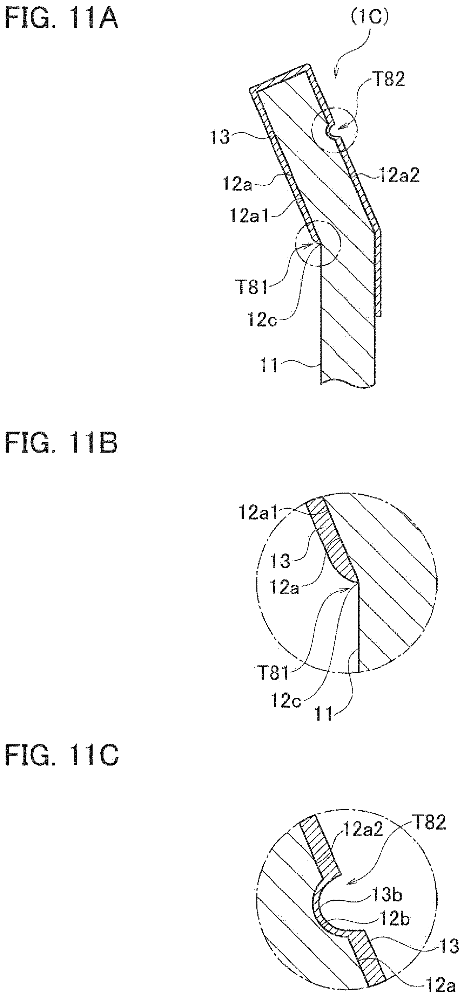

As described above, the band saw blade 1 is manufactured by set processing subsequent to forming the coat layer 13 on the surface of the teeth 12a. For this reason, in the set processing, the fixing unit 81 and the processing unit 82 of the set tooth machine 8 are pushed from the top of the coat layer 13, and thus an characteristic indentation portion, which is different from the conventional one, is formed at the edge portions of the processing unit 82 and the fixing unit 81. The indentation portion will be described with reference to FIG. 10A, FIG. 10B, FIG. 11A, FIG. 11B and FIG. 11C, using the right set tooth Rw which is set in the right direction as an example.

FIG. 10A is a right side view illustrating a surface state of the tooth 12a in the band saw blade 1, and FIG. 10B is a left side view illustrating the surface state of the tooth 12a in the band saw blade 1. FIG. 11A is a cross-sectional view illustrating a cross section of the tooth 12a in the band saw blade 1. FIG. 11B is an enlarged view of an indentation portion T81 in FIG. 11A, and FIG. 11C is an enlarged view of an indentation portion T82 in FIG. 11A.

As illustrated in FIG. 10A, FIG. 11A, and FIG. 11B, the indentation portion T81 (the second indentation portion T81) by means of the fixing unit 81 is formed at the root portion of the right side surface which is an inner surface 12a1 of the tooth 12a of the right set tooth Rw in the set direction. The indentation portion T81 is clearly and visually recognized over the entire longitudinal direction of the tooth 12a in a straight line extending in the longitudinal direction of the body portion 11. As illustrated in FIG. 10B, FIG. 11A, and FIG. 11C, the indentation portion T82 (first indentation portion T82) by means of the processing unit 82 is formed at the center portion of the left side surface in the tooth height direction (up-down direction) which is an outer surface 12a2 of the tooth 12a of the right set tooth Rw in the set direction. The indentation portion T82 is clearly and visually recognized over the entire longitudinal direction of the tooth 12a in a straight line inclined in such a way that the cutting direction AR3 side faces downward.

That is, in the band saw blade 1, the indentation portion T81, the indentation portion T82, and the coat layer 13 have the following characteristics (A), (B), and (C) by performing a coat layer forming process for forming the coat layer 13 on the tooth 12a, and then performing a set processing step for performing the set processing . (A) After the coat layer 13 is formed, a bent portion 12c is formed by the fixing unit 81. For this reason, in the coat layer 13, a portion of the region on the surface of the tooth 12a from the bent portion 12c to the body portion 11 side is peeled off due to friction with the fixing unit 81 or the like, and thus the formation density of the coat layer 13 is in a low state (In FIG. 10A, FIG. 10B, FIG. 11A, FIG. 11B, and FIG. 11C, a halftone dot portion in the coat layer 13 is not illustrated). That is, the coat layer 13 has a different density between the tooth tip side and the body portion side with the indentation portion T81 as a boundary. The indentation portion T81 formed on the surface of the tooth 12a is clearly and visually recognized by pushing the processing unit 82 against the coat layer 13 in addition to this difference. (B) After the coat layer 13 is formed, a recessed portion 12b is formed by the processing unit 82. For this reason, the coat layer 13b of the recessed portion 12b is compressed and is smaller in thickness (is thinner) than the other portions of the coat layer 13 (the portions other than the recessed portion). (C) After the coat layer 13 is formed, the recessed portion 12b is formed by the processing unit 82. For this reason, the indentation portion T82 visually recognized clearly on the surface of the coat layer 13 is formed.

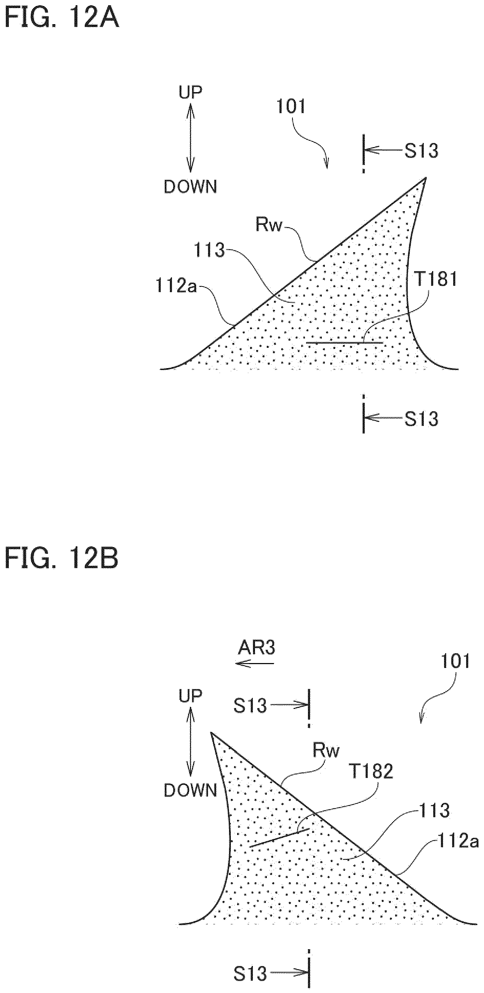

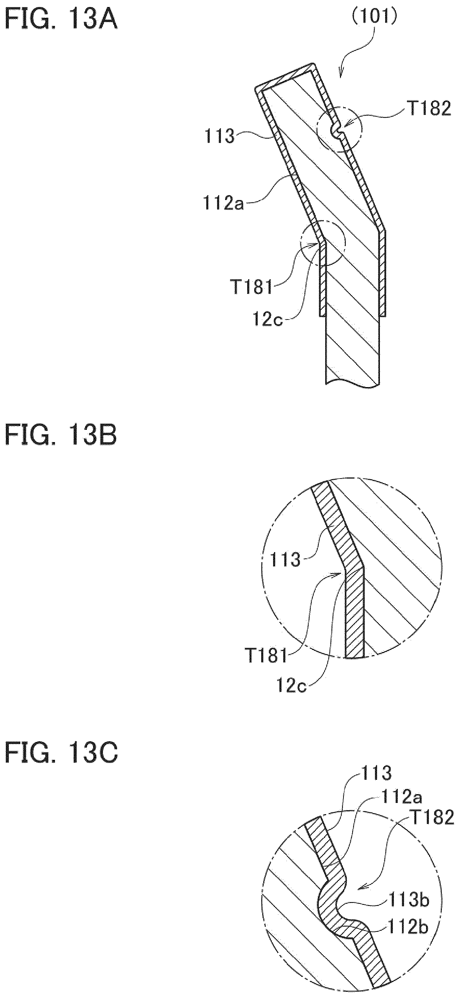

In contrast, the indentation portions T181 and T182 formed on a band saw blade 101 of a comparative example are those illustrated in FIG. 12A, FIG. 12B, FIG. 13A, FIG. 13B, and FIG. 13C. The band saw blade 101 of the comparative example is manufactured by a conventional manufacturing method in which coating processing is performed on set teeth after forming the set teeth. FIG. 12A is a right side view illustrating a surface state of the tooth 112a in the band saw blade 101 of the comparative example, and FIG. 12B is a left side view illustrating the surface state of the tooth 112a in the band saw blade 101 of the comparative example. FIG. 13A is a cross-sectional view illustrating a cross section of the tooth 112a in the band saw blade 101 of the comparative example, FIG. 13B is an enlarged view of the indentation portion T181 in FIG. 13A, and FIG. 13C is an enlarged view of the indentation portion T182 in FIG. 13A.

As illustrated in FIGS. 12A, FIG. 13A, and FIG. 13B, the indentation portion T181 by means of the fixing unit 81 is formed at the root portion of the right side surface of the tooth 112a of the right set tooth Rw. The indentation portion T181 is visually recognized slightly on a portion of the tooth 112a in some cases, in a straight line extending in the longitudinal direction of the body portion 11. As illustrated in FIG. 12B, FIG. 13A, and FIG. 13C, the indentation portion T182 by means of the processing unit 82 is formed at the center portion of the left side surface of the tooth 112a of the right set tooth Rw in the tooth height direction (up-down direction). The indentation portion T182 is visually recognized, in some cases, slightly on a portion of the tooth 112a, in a straight line inclined in such a way that the cutting direction AR3 side faces downward.

In the band saw blade 101 of the comparative example, the indentation portion T181, the indentation portion T182, and the coat layer 113 have the following characteristics (D), (E), and (F) by forming the coat layer 113 on the tooth 112a, and then performing the set processing. (D) The coat layer 113 is formed after a bent portion 112c is formed on the surface of the tooth 112a by the fixing unit 81. For this reason, the formation density of the coat layer 113 is almost the same on the blade edge side and the body portion side with the bent portion 112c as a boundary. (E) After a recessed portion 112b is formed by the processing unit 82, the coat layer 113 is formed. For this reason, the coat layer 13b of the recessed portion 112b has almost the same thickness as that of the other portions of the coat layer 113. (F) After the bent portion 112c and the recessed portion 112b are formed, the coat layer 113 is formed so as to cover the bent portion 112c and the recessed portion 112b. For this reason, the bent portion 112c and the recessed portion 112b are hidden in the coat layer 113, and the indentation portions T181 and T182 are partially difficult or impossible to be visually recognized in some cases.

As described above, the band saw blade 1 of the present embodiment has a characteristic structure different from that of the conventional product, even in the manufactured product itself, by performing the set processing after forming the coat layer 13. That is, (A), (B), and (C), which are characteristics of the band saw blade 1, are differences corresponding to (D), (E), and (F) of the band saw blade 101 of the comparative example, respectively, and the band saw blade 1 can be distinguished from other band saw blades by recognizing such differences as characteristic structures unique to the band saw blade 1.

As described above, a band saw blade 1 of the present embodiment includes: a body portion 11 having a band-like and an endless shape; a tooth portion 12 in which a tooth group TG, which is a set of a predetermined number of teeth 12a including a set tooth Rw, is repeatedly formed on one edge side of the body portion 11; and a coat layer 13 which is formed on a surface of the teeth 12a of the tooth portion 12, in which the set tooth Rw has a first indentation portion T82 as a recessed portion 12b in the coat layer 13 on an outer surface 12a2 in a set direction, and thickness of the coat layer 13 in the recessed portion 12b of the first indentation portion T82 is thinner than that of the coat layer 13 in portions other than the recessed portion 12b.

Further, in the band saw blade 1, the set tooth Rw may have a second indentation portion T81 as a bent portion 12c in the coat layer 13 on an inner surface 12a1 in the set direction, and the coat layer 13 may have a lower formation density on a body portion 11 side than on a tooth tip side with the second indentation portion T81 as a boundary.

In the band saw blade 1 having these characteristic points, the coat layer 13 of uniform thickness is formed on a portion necessary for cutting by coating processing in a manufacturing process.

Further, as described above, a method for manufacturing a band saw blade according to the present embodiment which is provided with a looped body portion 11 having a band-like shape; a tooth portion 12 in which a tooth group TG, which is a set of a predetermined number of teeth 12a including a set tooth Rw, is repeatedly formed on one edge side of the body portion 11; and a coat layer 13 which is formed on a surface of the teeth 12a of the tooth portion 12, the method includes: performing a coat layer formation step of forming a coat layer 13 on the teeth 12a of an intermediate blade 1A in which the teeth 12a are all straight teeth S, and then performing set processing of setting and forming a predetermined tooth 12a into the set tooth Rw.

In the method for manufacturing the band saw blade of one aspect, the coating processing which is a coat layer formation step is performed only on the straight teeth. This makes it possible to form a coat layer of uniform thickness.

Further, the method for manufacturing the band saw blade of one aspect may have the coat layer formation step in which the intermediate blade 1A and the band-like spacer 2 are lapped and wound so as to expose the tooth portion 12, thereby forming a coil body C having a spiral coil shape, and the formed coil body C is put into the coating device 7 to form the coat layer 13.

The present embodiment is not limited to the configuration described above, and various modifications can be made to the extent not departing from the gist of the present disclosure.

The set teeth and the straight teeth in the tooth group TG of the band saw blade 1 are not limited to the structure of the present embodiment. The material and formation method of the coat layer 13 are not limited to the ones of the present embodiment. The thickness of the spacer 2 can be set as small as possible within the range in which it is possible to obtain a coat layer 13 of good quality according to the type of the band saw blade 1 and the conditions of the coating processing thereof. This makes it possible to increase the length of the saw blade which can form the coat layer in one coating processing.

The disclosure of the present application relates to the subject matters described in Japanese Patent Application No. 2021-168801 filed on October 14, 2021.

## Claims

1. A band saw blade comprising:
a body portion having a band-like and an endless shape;
a tooth portion in which a tooth group, which is a set of a predetermined number of teeth including a set tooth, is repeatedly formed on one edge side of the body portion; and
a coat layer which is formed on a surface of the teeth of the tooth portion, **characterized in that**
the set tooth has a first indentation portion as a recessed portion in the coat layer on an outer surface in a set direction, and
thickness of the coat layer in the recessed portion of the first indentation portion is thinner than that of the coat layer in portions other than the recessed portion.

2. The band saw blade according to claim 1, wherein
the set tooth has a second indentation portion as a bent portion in the coat layer on an inner surface in the set direction,
the coat layer has a lower formation density on a body portion side than on a tooth tip side with the second indentation portion as a boundary.

3. A method for manufacturing a band saw blade which is provided with a body portion having a band-like and an endless shape; a tooth portion in which a tooth group, which is a set of a predetermined number of teeth including a set tooth, is repeatedly formed on one edge side of the body portion; and a coat layer which is formed on a surface of the teeth of the tooth portion, the method
**characterized by**
performing a coat layer formation step of forming the coat layer on the teeth of an intermediate blade in which the teeth are all straight teeth, and then performing set processing of setting and forming a predetermined tooth into the set tooth.

4. The method for manufacturing a band saw blade according to claim 3, wherein
in the coat layer formation step, the intermediate blade and a band-like spacer are lapped and wound so as to expose the tooth portion, thereby forming a coil body having a spiral coil shape, and the formed coil body is put into a coating device to form the coat layer.

## Patentansprüche

1. Bandsägeblatt, umfassend:
einen Körperabschnitt, der eine bandartige und eine endlose Form aufweist;
einen Zahnabschnitt, in dem eine Zahngruppe, die ein Satz aus einer vorbestimmten Anzahl von Zähnen einschließlich eines geschränkten Zahns ist, wiederholt an einer Kantenseite des Körperabschnitts ausgebildet ist; und
eine Beschichtungsschicht, die auf einer Oberfläche der Zähne des Zahnabschnitts ausgebildet ist, **dadurch gekennzeichnet, dass**
der geschränkte Zahn einen ersten Vertiefungsabschnitt als einen vertieften Abschnitt in der Beschichtungsschicht auf einer Außenfläche in einer bestimmten Richtung aufweist, und
die Dicke der Beschichtungsschicht in dem vertieften Abschnitt des ersten Vertiefungsabschnitts dünner ist als die der Beschichtungsschicht in anderen Abschnitten als dem vertieften Abschnitt.

2. Das Bandsägeblatt nach Anspruch 1, wobei
der geschränkte Zahn einen zweiten Vertiefungsabschnitt als einen gebogenen Abschnitt in der Beschichtungsschicht auf einer inneren Oberfläche in der Schränkungsrichtung aufweist,
die Beschichtungsschicht eine geringere Bildungsdichte auf einer Körperabschnittsseite als auf einer Zahnspitzenseite mit dem zweiten Vertiefungsabschnitt als Begrenzung aufweist.

3. Verfahren zur Herstellung eines Bandsägeblatts, das mit einem Körperabschnitt mit einer bandartigen und einer endlosen Form, einem Zahnabschnitt, in dem eine Zahngruppe, die ein Satz aus einer vorbestimmten Anzahl von Zähnen einschließlich eines geschränkten Zahns ist, wiederholt an einer Kantenseite des Körperabschnitts ausgebildet ist, und einer Beschichtungsschicht, die auf einer Oberfläche der Zähne des Zahnabschnitts ausgebildet ist, ausgestattet ist, wobei das Verfahren **gekennzeichnet ist durch**:
Durchführen eines Schritts zur Bildung einer Beschichtungsschicht, bei dem die Beschichtungsschicht auf den Zähnen eines Zwischenblatts gebildet wird, bei dem die Zähne alle gerade Zähne sind, und anschließendes Durchführen eines Schränkungsvorgangs, bei dem ein vorbestimmter Zahn zu dem geschränkten Zahn festgelegt und geformt wird.

4. Das Verfahren zur Herstellung eines Bandsägeblatts nach Anspruch 3, wobei
im Schritt der Bildung der Beschichtungsschicht das Zwischenblatt und ein bandartiger Abstandshalter geläppt und gewickelt werden, um den Zahnabschnitt freizulegen, wodurch ein Spulenkörper mit einer spiralförmigen Spulenform gebildet wird, und der gebildete Spulenkörper in eine Beschichtungsvorrichtung gegeben wird, um die Beschichtungsschicht zu bilden.

## Revendications

1. Lame de scie à ruban comprenant :
une partie de corps ayant une forme de ruban et sans fin ;
une partie dentée dans laquelle un groupe de dents, qui est un ensemble d'un nombre prédéterminé de dents comprenant une dent réglée, est formé de manière répétée sur un côté de bord de la partie de corps ; et
une couche de revêtement qui est formée sur une surface des dents de la partie dentée, **caractérisée en ce que**
la dent réglée présente une première partie d'indentation en tant que partie en creux dans la couche de revêtement, sur une surface extérieure dans la direction de réglage, et
l'épaisseur de la couche de revêtement dans la partie en creux de la première partie d'indentation est inférieure à celle de la couche de revêtement dans des parties autres que la partie en creux.

2. Lame de scie à ruban selon la revendication 1, dans laquelle
la dent réglée présente une seconde partie d'indentation en tant que partie pliée dans la couche de revêtement, sur une surface intérieure dans la direction de réglage,
la couche de revêtement présente une densité de formation plus faible du côté de la partie de corps que du côté de la pointe de dent, avec la seconde partie d'indentation comme limite.

3. Procédé de fabrication d'une lame de scie à ruban qui est pourvue d'une partie de corps ayant une forme de ruban et sans fin ; d'une partie dentée dans laquelle un groupe de dents, qui est un ensemble d'un nombre prédéterminé de dents comprenant une dent réglée, est formé de manière répétée sur un côté de bord de la partie de corps ; et d'une couche de revêtement qui est formée sur la surface des dents de la partie dentée, le procédé étant **caractérisé par** la réalisation d'une étape de formation de couche de revêtement consistant à former la couche de revêtement sur les dents d'une lame intermédiaire dans laquelle les dents sont toutes des dents droites, et ensuite la réalisation d'un traitement de réglage consistant à régler et à former une dent prédéterminée en dent réglée.

4. Procédé de fabrication d'une lame de scie à ruban selon la revendication 3, dans lequel,
lors de l'étape de formation de couche de revêtement, la lame intermédiaire et un entretoise en forme de ruban sont superposées et enroulées de manière à exposer la partie dentée, formant ainsi un corps de bobine ayant une forme de bobine en spirale, et le corps de bobine formé est introduit dans un dispositif de revêtement pour former la couche de revêtement.
